# EUROPÄISCHE PATENTSCHRIFT

(11) **EP 1 417 877 B1**
(45) Veröffentlichungstag und Bekanntmachung des Hinweises auf die Patenterteilung: **18.11.2009**
(21) Anmeldenummer: 03103532.2
(22) Anmeldetag: 24.09.2003
(51) Int. Cl.: A01D 45/02

(54) **Pflückwalze**
Picking roller
Rouleau de cueillette

(30) Priorität: 29.10.2002 DE 10250338
(43) Veröffentlichungstag der Anmeldung: 12.05.2004
(73) Patentinhaber: Maschinenfabrik Kemper GmbH & Co. KG, 48973 Stadtlohn (DE)
(72) Erfinder: Resing, Alfons, 48703 Stadtlohn (DE); Rickert, Clemens, 48703 Stadtlohn (DE)
(74) Vertreter: Holst, Sönke

(56) Entgegenhaltungen:
- EP-A- 0 369 440
- US-A- 1 827 216
- US-A- 2 180 594
- US-A- 2 490 715
- US-A- 2 569 175

## Beschreibung

Die Erfindung betrifft eine Pflückwalze für ein Erntegerät zur Ernte von Fruchtständen stängeliger Pflanzen, mit einem Walzenkörper und um seinen Umfang verteilten, überstehenden Mitnehmern, wobei sich der Durchmesser des Walzenkörpers über seine Länge ändert, der Abstand der äußeren Kanten der Mitnehmer vom Walzenkörper sich dazu komplementär ändert und die Pflückwalze ein bezüglich der Flussrichtung des Ernteguts vorderes Ende und ein hinteres Ende aufweist und die Pflückwalze einen ihrem vorderen Ende benachbarten Pflückbereich, in dem sie im Erntebetrieb mit den Fruchtstände tragenden Teilen der Pflanzen zusammenwirkt, und einen ihrem hinteren Ende benachbarten Bereich aufweist, in dem sie im Erntebetrieb mit den oberhalb der Fruchtstände befindlichen Teilen der Pflanzen zusammenwirkt.

Pflücker finden in der landwirtschaftlichen Erntetechnik Verwendung, um die Fruchtstände von Pflanzen von den übrigen Teilen der Pflanzen zu trennen. Derartige Pflücker weisen in der Regel zwei Pflückwalzen auf, zwischen denen der Pflanzenstängel eingezogen wird. Gelegentlich wird auch nur eine Pflückwalze verwendet, die mit einer festen Wand zusammenwirkt. Die Pflückwalze oder -walzen zieht bzw. ziehen die Pflanze durch einen Pflückspalt hindurch, dessen Abmessungen enger als die des Fruchtstandes sind. Dadurch wird der Fruchtstand, beispielsweise ein Maiskolben, von den Resten der Pflanze getrennt und kann separat verarbeitet werden. Die Pflückwalzen sind oft mit sich über ihre Länge erstreckenden Mitnehmern versehen, die auf einen rohrförmigen Grundkörper aufgesetzt sind.

Außer Pflückwalzen mit zylindrischen Hüllkurven, denen konische, mit Gewindegängen versehene Spitzen zum Einzug der Pflanzen vorgeordnet sein können, wie in der US 4 377 062 A offenbart, finden im Stand der Technik konische Pflückwalzen Verwendung, wie sie beispielsweise in der US 2 870 593 A, US 3 832 836 A, DE 1 757 213 A, DE 2 313 519 A, DE 197 30 912 A und EP 0 943 229 A offenbart sind. Die Hüllkurven der Pflückwalzen weisen an ihrer in Fahrtrichtung vorderen Seite einen geringeren Durchmesser auf als an ihrem hinteren Ende. Dadurch erreicht man, dass die Pflanzen in ihrem unteren Bereich, der mit den vorderen, einen kleineren Durchmesser aufweisenden Abschnitten der Pflückwalze zusammenwirkt, relativ langsam eingezogen werden. Die oberen, dünneren Teile der Pflanzen werden mit demgegenüber höherer Geschwindigkeit durch den hinteren, einen größeren Durchmesser aufweisenden Bereich der Pflückwalzen eingezogen. Dadurch soll der - in der Regel am unteren Teil der Pflanze angewachsene - Kolben beim Abstreifen im Pflückspalt relativ langsam eingezogen und somit schonend behandelt werden, während der obere, dünne Teil des Stängels schnell eingezogen wird.

In den zwei letztgenannten Schriften wird vorgeschlagen, dass die Achsen der zusammenwirkenden Pflückwalzen konvergieren, so dass der zwischen den Pflückwalzen verbleibende Spalt über seine Länge konstant breit sein kann. In der US 1 641 436 A ist ebenfalls ein Pflücker mit konischen Pflückwalzen gezeigt, deren Achsen konvergieren, so dass die Breite des Spalts zwischen den Pflückwalzen über seine Länge konstant ist. Allerdings sind die Pflückwalzen am vorderen, unteren Ende dicker als am oberen, hinteren Ende.

Die als gattungsbildend angesehene US 1 827 216 A beschreibt Pflückwalzen für einen Maispflücker, deren Walzendurchmesser sich vom Einlassende der Pflückwalze nach hinten hin in einer Stufe vergrößert. Die äußeren Hüllkreise der Mitnehmer weisen einen über die ganze Länge der Pflückwalze konstanten Durchmesser auf.

Die US 2 569 175 A zeigt eine Pflückwalze, deren Walzendurchmesser sich ebenfalls vom Einlassende der Pflückwalze nach hinten hin in einer Stufe vergrößert. Die äußeren Hüllkreise der Mitnehmer weisen im vorderen Bereich der Pflückwalze einen größeren Außendurchmesser auf als im hinteren Bereich, in dem der Walzendurchmesser vergrößert ist.

Als nachteilig ist bei den Pflückern mit konischen Pflückwalzen anzusehen, dass sich bei parallelachsig angeordneten Pflückwalzen der Abstand zwischen den zusammenwirkenden Pflückwalzen nach hinten sukzessive verringert, was zu einem Quetschen der Pflanzenstängel im hinteren Bereich führen kann, wodurch sich die aufzubringende Antriebsleistung vergrößert, und dass die Konizität aus mechanischräumlichen Gründen begrenzt ist, während bei den Pflückwalzen mit konvergierenden Achsen aufwändige und kostspielige Winkelgetriebe erforderlich sind. Pflücker mit zylindrischen Pflückwalzen weisen nicht den Vorteil des sich über die Länge der Pflückwalzen beschleunigenden Einziehens der Pflanzen auf, den die konischen Pflückwalzen bieten.

Die der Erfindung zu Grunde liegende Aufgabe wird darin gesehen, eine gegenüber dem Stand der Technik verbesserte Pflückwalze bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Der Durchmesser des Walzenkörpers ändert sich über die Länge der Pflückwalze und dazu komplementär, d. h. in entgegen gesetzter Weise, ändert sich der Abstand der äußeren Kanten der Mitnehmer vom Walzenkörper. Da sich der Walzenkörper in der Flussrichtung des Ernteguts verengt, wächst analog der Abstand der Mitnehmer vom Walzenkörper an und ihr Hüllkreisdurchmesser vergrößert sich in der Flussrichtung des Ernteguts. Da der von den äußeren Kanten der Mitnehmer beschriebene Hüllkreis die Einzugsgeschwindigkeit der Pflückwalze definiert, wird ein weiterer Freiheitsgrad geschaffen, um einen gewünschten Verlauf der Einzugsgeschwindigkeiten über die Länge der Pflückwalze zu erhalten.

Der Walzenkörper hat in einem Pflückbereich der Pflückwalze, in dem die Pflückwalze mit den Fruchtstände tragenden Teilen der Pflanzen zusammenwirkt, und in dem die Pflanzen relativ langsam eingezogen werden, um die Fruchtstände schonend abzustreifen, einen geringeren Durchmesser als in einem stromab gelegenen Bereich der Pflückwalze, der insbesondere oberhalb der Fruchtstände befindliche Teile der Pflanzen einzieht. Der Hüllkreisdurchmesser der Mitnehmer ist im Pflückbereich kleiner als im dem hinteren Ende benachbarten Bereich der Pflückwalze.

Auf diese Weise erreicht man, dass die Pflückwalzen auch bei einer größeren Konizität parallel zueinander angeordnet werden können, da die Mitnehmer der einen Pflückwalze in den Raum eintauchen können, der durch den verjüngten Walzenkörper der anderen Pflückwalze frei geworden ist. Die Mitnehmer der einen Pflückwalze drücken dort die oberen Pflanzenteile gegen den Walzenkörper der anderen Pflückwalze, was eine Vergrößerung der Einzugsgeschwindigkeit in dem Bereich der Pflückwalze, der die oberen Teile der Pflanzen einzieht, gegenüber dem Pflückbereich der Pflückwalze bewirkt.

Der Walzenkörper kann - insbesondere zwischen dem Pflückbereich und dem stromab davon gelegenen Bereich, in dem die oberen Teile der Pflanzen eingezogen werden - kegelstumpfförmig oder sich auf andere Weise kontinuierlich ändernd gestaltet sein. Dadurch erhält man eine kontinuierliche Verengung des Walzenkörpers. Sind dazu komplementär die Mitnehmer konisch gestaltet, d. h. erweitert sich der Hüllkreisdurchmesser der Außenkanten der Mitnehmer kontinuierlich, erhält man einen kontinuierlichen, insbesondere linearen Anstieg der Einzugsgeschwindigkeit.

Denkbar ist auch eine stufenförmige Verengung des Walzenkörpers, die herstellungstechnische Vorteile haben kann. Analog würden sich dann die Mitnehmer stufenförmig nach außen erweitern. Stufenförmige und konische Verengungen des Walzenkörpers können auch kombiniert werden.

In der Regel wachsen die Fruchtstände der Pflanzen in einer gewissen Höhe, die im Bereich von einem Meter und darüber liegen kann. Es wäre vorteilhaft, wenn die darunter liegenden Teile der Pflanzen relativ schnell eingezogen würden, um die Arbeitsgeschwindigkeit zu vergrößern. Es wird vorgeschlagen, stromauf des Pflückbereichs der Pflückwalze einen Einlassbereich vorzusehen, in dem die Einzugsgeschwindigkeit der Pflückwalze größer als im Pflückbereich ist. Der Einlassbereich weist daher in vorteilhafter Weise einen Walzenkörper auf, dessen Durchmesser gegenüber dem Walzenkörper im Pflückbereich reduziert ist. Analog sind die Hüllkreisdurchmesser der Mitnehmer im Einlassbereich größer als im Pflückbereich.

In den Zeichnungen sind drei nachfolgend näher beschriebene Ausführungsbeispiele der Erfindung dargestellt. Es zeigt:
- Fig. 1: eine Draufsicht auf eine Einzugs- und Pflückeinrichtung einer Erntemaschine mit Pflückwalzen nach einer ersten Ausführungsform,
- Fig. 2: eine Seitenansicht der Einzugs- und Pflückeinrichtung aus Figur 1,
- Fig. 3: eine perspektivische Ansicht einer ersten Ausführungsform einer Pflückwalze,
- Fig. 4: einen Querschnitt durch zwei Pflückwalzen der Figur 3 entlang der Linie 4-4 beim Erntebetrieb,
- Fig. 5: einen Querschnitt durch zwei Pflückwalzen der Figur 3 entlang der Linie 5-5 beim Erntebetrieb,
- Fig. 6: eine perspektivische Ansicht einer zweiten Ausführungsform einer Pflückwalze, und
- Fig. 7: eine Ansicht zweier zusammenwirkender Pflückwalzen gemäß einer dritten Ausführungsform der Erfindung.

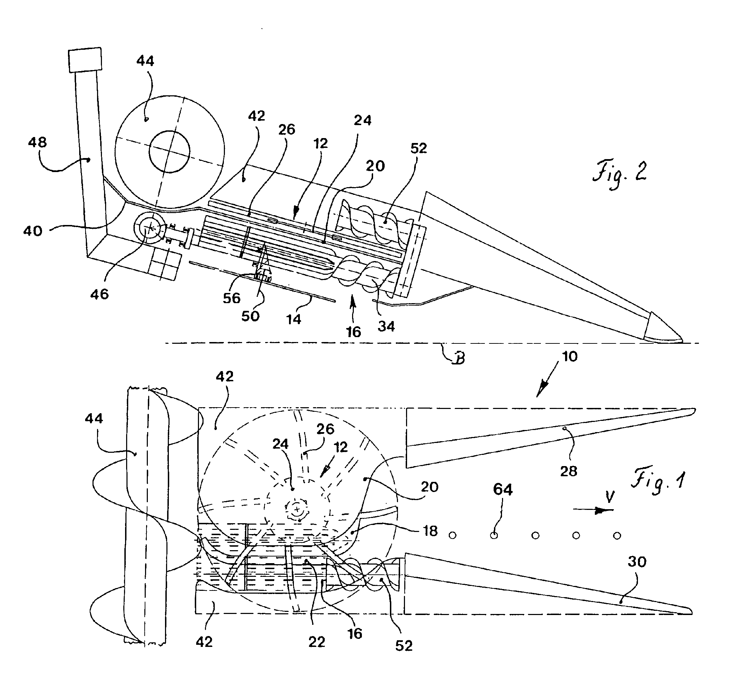

In der Figur 1 ist eine Einzugs- und Pflückeinrichtung 10 einer Erntegutbergungsvorrichtung dargestellt, die ein oberes Einzugselement 12, das zum Erfassen und Einziehen der zu erntenden Pflanze dient, ein drehbares Häckselmesser 14, eine erste Pflückwalze 16 und eine zweite Pflückwalze 18 aufweist, die unterhalb eines in einem Abstreifblech 20 eingebrachten Pflückspalts 22 angeordnet sind.

Das obere Einzugselement 12 ist um eine etwa vertikal verlaufende Achse drehbar angeordnet und wird durch einen Antrieb in Rotation versetzt, in Figur 1 im Uhrzeigersinn. Das Einzugselement 12 ist oberhalb des Abstreifblechs 20 angeordnet und hat eine leicht nach vorn geneigte Drehachse. Das Einzugselement 12 besteht in seinem grundsätzlichen Aufbau aus einer zentralen Scheibe 24 mit über ihren Umfang verteilten, sich im Wesentlichen radial erstreckenden Fingern 26, die in der Ebene der Scheibe 24 entgegen der Drehrichtung, also nachlaufend gekrümmt sind. Dem Einzugselement 12 sind in Vorwärtsbewegungsrichtung V der Erntegutbergungsvorrichtung Stängelteiler 28, 30 vorgeordnet. Auch ist die in Vorwärtsbewegungsrichtung vorlaufende Kante des Abstreifblechs 20 derart gekrümmt, dass die Stängel der Pflanzen 64 in den Wirkbereich des Einzugselements 12 gedrückt werden.

Anhand der Figur 1 ist die Wirkungsweise des Einzugselements 12 gut erkennbar. Ein Stängel einer auf dem Feld stehenden Pflanze 64 gerät - nachdem er gegebenenfalls durch die Stängelteiler 28, 30 und/oder die vorlaufende Kante des Abstreifblechs 20 in Richtung auf den Pflückspalt 22 verbogen wurde - mit einem Finger 26 des Einzugselements 12 in Berührung. Der Stängel wird von der vorlaufenden Oberfläche des Fingers 26 mitgeführt und aufgrund der nachlaufenden und daher abweisenden Krümmung des Fingers 26 nach außen gedrückt. Auf diese Weise wird der Stängel der Pflanze 64 durch den Finger 26 in den Pflückspalt 22 transportiert, der sich zumindest näherungsweise parallel zur Vorwärtsbewegungsrichtung V erstreckt und zwischen der ersten Pflückwalze 16 und dem Einzugselement 12 in das Abstreifblech 20 eingebracht ist.

Die erste Pflückwalze 16 ist seitlich neben dem Einzugselement 12 angeordnet und leicht nach vorn und unten geneigt. Sie ist, betrachtet man die seitliche Richtung, parallel zur Vorwärtsbewegungsrichtung V orientiert. Im vorderen, bezüglich der Bewegungsrichtung der Pflanzen 64 stromaufwärts liegenden Bereich der ersten Pflückwalze 16 befindet sich ein Schneckenförderer 34, der in Zusammenwirken mit dem Einzugselement 12 den Stängel der Pflanze 64 in den Pflückspalt 22 einzieht.

Oberhalb des eingangsseitigen Endes des Pflückspalts 22 und oberhalb des Einzugselements 12 ist ein Förderelement in Form einer Förderschnecke 52 angeordnet. Durch das Zusammenspiel der beiden Förderschnecken 34, 52 und des Fingers 28 wird die Pflanze 64 sicher gehalten und geradlinig in den Pflückspalt 22 und zwischen die Pflückwalzen 16, 18 geführt.

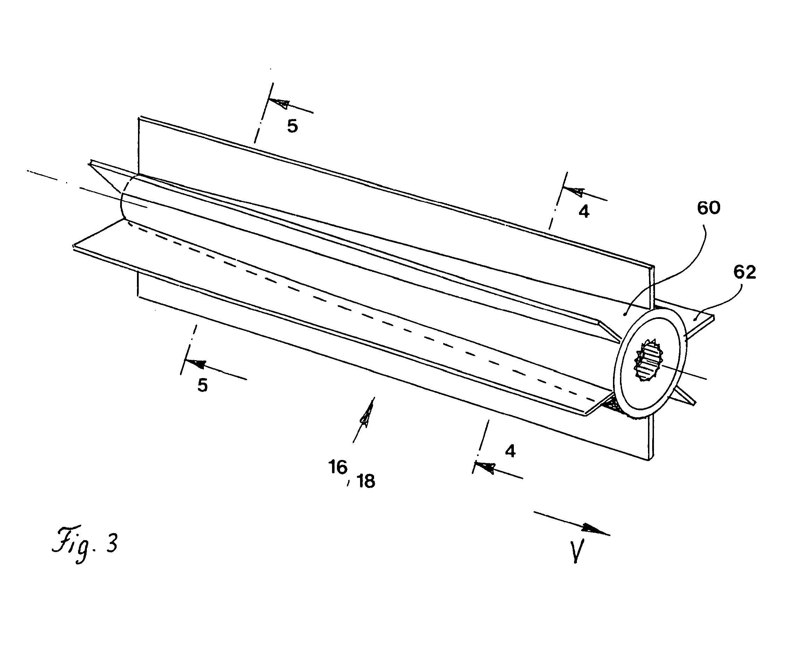

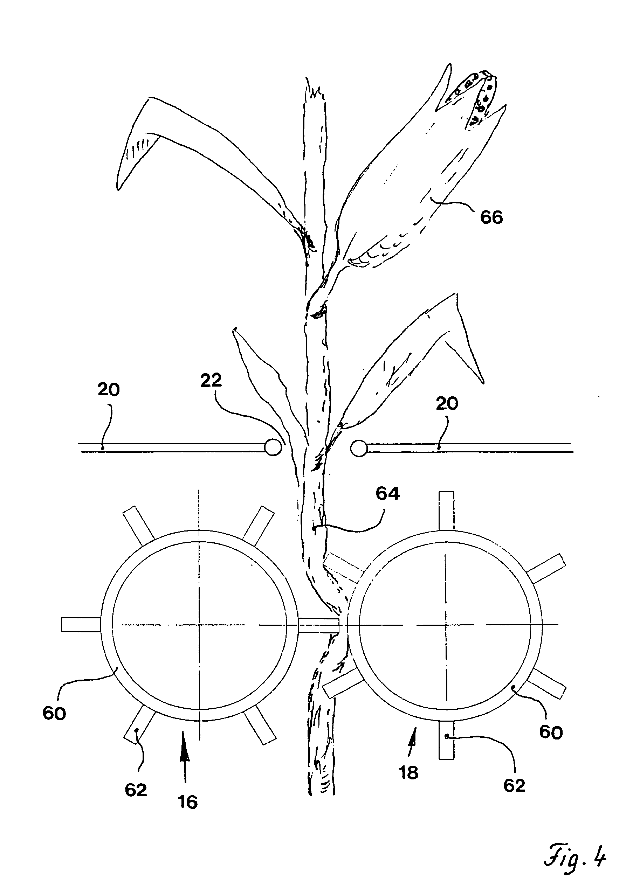

Der Stängel der Pflanze 64 gelangt in den wirksamen Pflückbereich der zweiten Pflückwalze 18, deren vordere Spitze (bezüglich der Vorwärtsbewegungsrichtung V betrachtet) ebenfalls vor der Drehachse des Einzugselements 12 liegt. Die zweite Pflückwalze 18 ist parallel zur ersten Pflückwalze 16 orientiert und zwischen letzterer und der Drehachse des Einzugselementes 12 angeordnet, wobei der zwischen der ersten Pflückwalze 16 und der zweiten Pflückwalze 18 definierte Spalt vertikal unterhalb des Pflückspalts 22 angeordnet ist. Die erste Pflückwalze 16 und die zweite Pflückwalze 18 sind über ihre gesamte Länge in an sich bekannter Weise mit axial verlaufenden, nach außen überstehenden Mitnehmern 38 versehen, wie sie am besten in der Figur 3 erkennbar sind. Die Achsen der Pflückwalzen 16 und 18 verlaufen parallel zueinander. Die zweite Pflückwalze 18 und die erste Pflückwalze 16 ziehen den Stängel der Pflanze 64 (s. Figur 4) nach unten ein. Dabei dient das Abstreifblech 20 beidseits des Pflückspalts 22 zum Abstreifen von Fruchtständen 66 der Pflanze 64.

Die durch die Pflückeinrichtung abgetrennten Fruchtstände 66 der Pflanzen 64, wie Maiskolben, Fruchtstände von Sonnenblumen usw. werden durch das Einzugselement 12 in einen an der Rückseite der Einzugs- und Pflückeinrichtung 10 angeordneten Trog 40 gefördert, wobei eine Abdeckung 42 beidseits des Pflückspalts 22 einen zum Trog 40 führenden Kanal definiert, durch den die Fruchtstände der Pflanzen 64 gefördert werden. Eine oberhalb des Trogs 40 angeordnete, quer zur Vorwärtsfahrtrichtung orientierte Förderschnecke 44 transportiert die Fruchtstände zu einem Erntefahrzeug (z. B. Mähdrescher oder Feldhäcksler) oder auf einen Anhänger. Unterhalb des Trogs 40 ist eine Welle 46, die zum Antrieb der beiden Pflückwalzen 16, 18, des Häckselmessers 14, der Förderschnecke 52 und des Einzugselements 12 der Einzugs- und Pflückeinrichtungen 10 dient. Die Welle 46 steht mit dem Motor eines die Erntegutbergungsvorrichtung tragenden Fahrzeugs in Antriebsverbindung. Ein Rahmen 48 trägt die Einzugs- und Pflückeinrichtungen 10 der Erntegutbergungsvorrichtung, die alle durch die Welle 46 angetrieben werden.

Die Reste der Pflanze 64, die von den Pflückwalzen 16, 18 nach unten abtransportiert werden, gelangen in den Wirkungsbereich des rotierenden, vierarmigen Häckselmessers 14 und werden durch dieses in einzelne Stücke zerteilt. Das Häckselmesser 14 rotiert um eine vertikal verlaufende Drehachse 50, die bezüglich der Vorwärtsbewegungsrichtung V zwischen der Drehachse des Einzugselements 12 und der Förderschnecke 44 angeordnet ist und wird durch die Welle 46 über ein Winkelgetriebe 56 angetrieben.

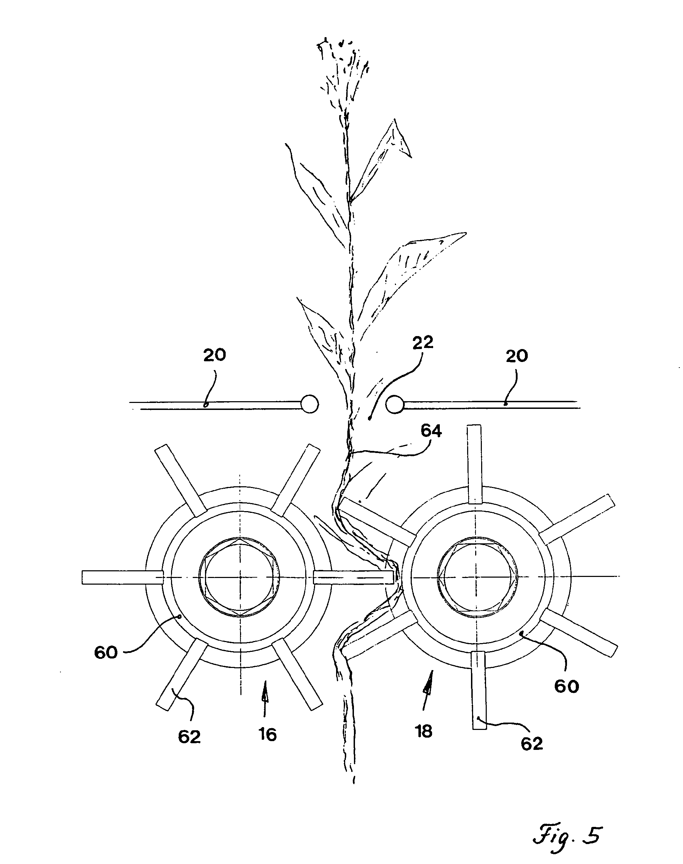

In der Figur 3 ist eine der erfindungsgemäßen Pflückwalzen 16, 18 perspektivisch dargestellt. Sie ist aus einem einteiligen, hohlen Walzenkörper 60 und gleichmäßig um ihren Umfang verteilten, sich radial zu ihrer Längs- und Drehachse erstreckenden Mitnehmern 62 aufgebaut. Der Walzenkörper 60 ist kegelstumpfförmig (konisch), wobei er an seinem in Vorwärtsbewegungsrichtung V vorderen Ende einen größeren Durchmesser aufweist als an seinem hinteren Ende. Außerdem vergrößert sich der Außendurchmesser des von den äußeren Kanten der Mitnehmer 62 beschriebenen Hüllkreises vom vorderen zum hinteren Ende der Pflückwalze 16, 18 linear. Der Hüllkreis der Pflückwalze 16, 18 ist somit konisch und hat seinen größten Durchmesser am hinteren, stromab gelegenen Ende. Die Pflückwalzen 16, 18 werden synchron (mit gleichen Drehzahlen) angetrieben und ihre Mitnehmer 62 sind relativ zueinander symmetrisch winkelversetzt. Die Mitnehmer 62 einer Pflückwalze 16, 18 tauchen in an sich bekannter Weise in den Hüllkreis der Mitnehmer 62 der jeweils anderen Pflückwalze 18, 16 ein (s. Figur 4 und 5). Wie oben beschrieben, werden Pflanzen durch jeweils einen Finger 16 des Einzugselements 12 entlang der Länge des Pflückspalts 22 und der Pflückwalzen 16, 18 gefördert. Durch die Konizität der Pflückwalzen 16, 18 steigt ihre Einzugsgeschwindigkeit kontinuierlich an, je weiter die Pflanze entlang der Länge der Pflückwalzen 16, 18 gefördert wird. Die sich in Flussrichtung verjüngenden Walzenkörper 60 ermöglichen trotz der parallelen Anordnung der Achsen der Pflückwalzen 16, 18 eine gegenüber dem Stand der Technik vergrößerte Konizität und einen über die Länge der Pflückwalzen 16, 18 konstant großen Abstand zwischen dem Walzenkörper 60 der einen Pflückwalze 16, 18 von den Mitnehmern 62 der jeweils anderen Pflückwalze 18, 16.

Die Figur 4 zeigt einen Schnitt durch die Pflückwalzen 16, 18 entlang der Linie 4-4 der Figur 3. Eine Pflanze 64 befindet sich im Pflückspalt 22 und ihre Fruchtstände 66 (Kolben) sind oberhalb des Pflückspalts. An der Linie 4-4 beginnt etwa der Pflückbereich der Pflückwalzen 16, 18, in dem die die Fruchtstände tragenden Teile der Pflanzen 64 von den Pflückwalzen 16, 18 eingezogen werden. Der Durchmesser der Walzenkörper 60 der Pflückwalzen 16, 18 ist an dieser Stelle relativ groß, während der Abstand der äußeren Kanten der Mitnehmer 62 von den Walzenkörpern 60 recht gering ist. Die Pflanze 64 wird von den Mitnehmern 62 somit nur geringfügig zur Seite abgebogen und gegen den Walzenkörper 60 der jeweils anderen Pflückwalze 18 gedrückt. Die Pflanze 64 wird wegen des relativ geringen Durchmessers der Mitnehmer 62 und der geringen seitlichen Verbiegung der Pflanze 64 verhältnismäßig langsam eingezogen, so dass die Fruchtstände 66 schonend gepflückt werden.

Die Figur 5 zeigt einen Schnitt durch die Pflückwalzen 16, 18 entlang der Linie 5-5, die sich stromab des Pflückbereichs der Pflückwalzen 16, 18 befindet, und in dem auch der Außendurchmesser der Walzenkörper 60 entlang der Linie 4-4 dargestellt ist. In diesem stromab vom Pflückbereich gelegenen Bereich sind die die Fruchtstände 66 tragenden Teile der Pflanzen 64 bereits durch den Pflückspalt 22 gezogen. Der Durchmesser der Walzenkörper 60 ist an dieser Stelle relativ klein, während der Abstand der äußeren Kanten der Mitnehmer 62 von den Walzenkörpern 60 und der Hüllkreisdurchmesser der Außenkanten der Mitnehmer 62 verhältnismäßig groß ist. Die Pflanze 64 wird durch die Mitnehmer 62 recht weit zur Seite abgebogen und gegen den Walzenkörper 60 der anderen Pflückwalze 18 gedrückt. Sie wird aufgrund des Durchmessers des Hüllkreises der Außenkanten der Mitnehmer 18, der hier größer ist als im Pflückbereich, und wegen des Umbiegens der Pflanzen 64 zur Seite wesentlich schneller eingezogen als im Pflückbereich. Dadurch wird der Pflückspalt 22 recht schnell wieder frei, ohne dass durch die recht hohe Einzugsgeschwindigkeit Fruchtstände 66 beschädigt werden.

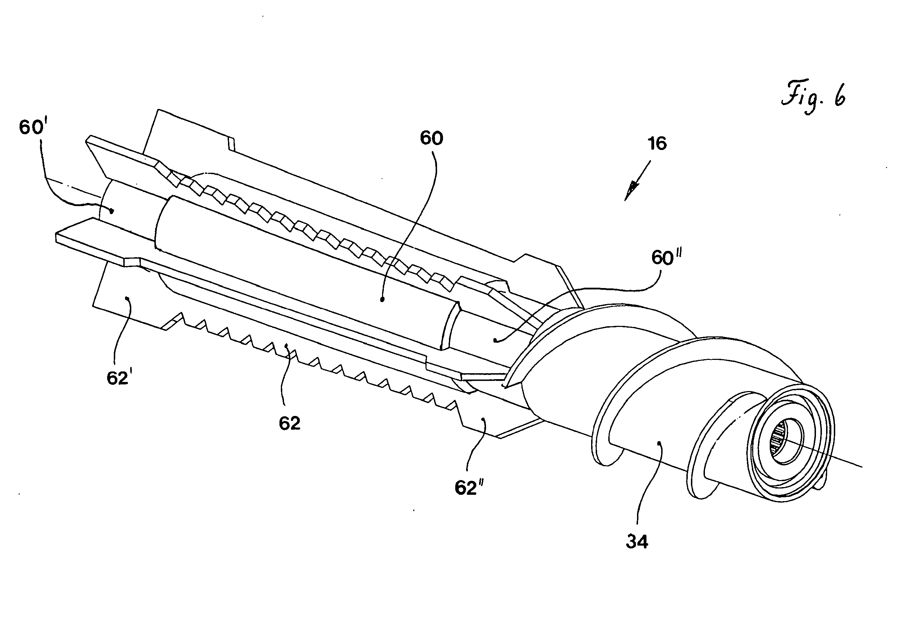

Die Figur 6 zeigt eine perspektivische Ansicht einer zweiten Ausführungsform einer erfindungsgemäßen Pflückwalze 16 mit einem an ihrer Spitze angeordneten Schneckenförderer 34. Die andere Pflückwalze 18 ist mit der Pflückwalze 16 baugleich, hat aber keinen Schneckenförderer 34. Die Pflückwalze 16 umfasst ebenfalls einen Walzenkörper 60, der jedoch einen kreiszylindrischen Mittelabschnitt und einen kreiszylindrischen Endabschnitt 60' sowie einen kreiszylindrischen Anfangsabschnitt 60" mit jeweils gegenüber dem Mittelabschnitt des Walzenkörpers 60 vermindertem Durchmesser aufweist. Um den Umfang des Walzenkörpers 60 sind sechs Mitnehmer 62 gleichmäßig verteilt. Die Mitnehmer 62 sind in ihrem mittleren Bereich, der dem Mittelabschnitt des Walzenkörpers 60 benachbart ist, verzahnt, um die Pflanzen 64 besser erfassen zu können. Eine derartige Verzahnung kann auch bei der Ausführungsform gemäß Figur 3 vorgesehen sein. Außerdem sind die Mitnehmer 62 mit Endabschnitten 62' und Anfangsabschnitten 62" ausgestattet, deren Außenkanten einen Hüllkreis beschreiben, dessen Durchmesser größer ist als der des mittleren Bereichs der Mitnehmer 62. Der Außendurchmesser der Mitnehmer 62 steigt mit anderen Worten in den Endabschnitten 62' und 62" stufenförmig an.

Die Pflückwalzen 16, 18 gemäß dieser Ausführungsform sind ebenfalls parallel zueinander angeordnet, werden mit übereinstimmenden Drehzahlen in Drehung versetzt und die zueinander symmetrisch winkelversetzten Mitnehmer 62 der beiden Pflückwalzen 16, 18 tauchen jeweils in den Hüllkreis der Mitnehmer 62 der jeweils anderen Pflückwalze 18, 16 ein. Der stufenförmige Anstieg der Außendurchmesser der Endabschnitte 62' und Anfangsabschnitte 62" der Mitnehmer 62 und das stufenförmige Absinken der Durchmesser der Endabschnitte 60' und Anfangsabschnitte 60" der Walzenkörper 60 ermöglichen, dass der Abstand zwischen den Walzenkörpern 60 einer Pflückwalze 16, 18 und den Mitnehmern 62 der anderen Pflückwalze 18, 16 über die Länge der Pflückwalzen 16, 18 konstant bleibt. Er könnte aber auch zum stromabwärtigen Ende der Pflückwalzen 16, 18 hin kleiner werden (was auch bei der Ausführungsform gemäß Figur 3 denkbar wäre), um sich an die nach oben hin verringernden Durchmesser der Pflanzen 64 anzupassen.

Im Pflückbereich der Pflückwalzen 16, 18, der dem mittleren Bereich des Walzenkörpers 60 entspricht, werden die Pflanzen 64 mit relativ geringer Geschwindigkeit eingezogen und durch die Mitnehmer 62 nur wenig in seitlicher Richtung gegen die gegenüberliegenden Walzenkörper 60 gebogen. Im Endbereich 62' steigt der Durchmesser der Mitnehmer 62 an, während der Endbereich 60' des Walzenkörpers 60 einen stufenförmig abgesenkten Durchmesser hat. Dadurch steigt die Einzugsgeschwindigkeit der Pflückwalzen 16, 18 stromab des Pflückbereichs der Pflückwalzen 16, 18 stufenförmig an.

In der Regel befinden sich die Fruchtstände 66 der Pflanzen 64 in einer gewissen Höhe über dem Erdboden. Daher werden die unteren Teile der Pflanzen 64 in einem Einlassbereich, der durch die Anfangsabschnitte 60", 62" der Walzenkörper 60 bzw. Mitnehmer 62 definiert ist, wegen des dort stufenförmig vergrößerten Außendurchmessers der Mitnehmer 62 und des stufenförmig verringerten Durchmessers des Walzenkörpers 60 schneller eingezogen als im Pflückbereich. Es wäre im Übrigen auch denkbar, die Anfangsund/oder Endabschnitte 60', 62', 60", 62" linear zu vergrößern bzw. zu verkleinern (d. h. kegelstumpfförmig zu gestalten), analog der Ausführungsform gemäß Figur 3.

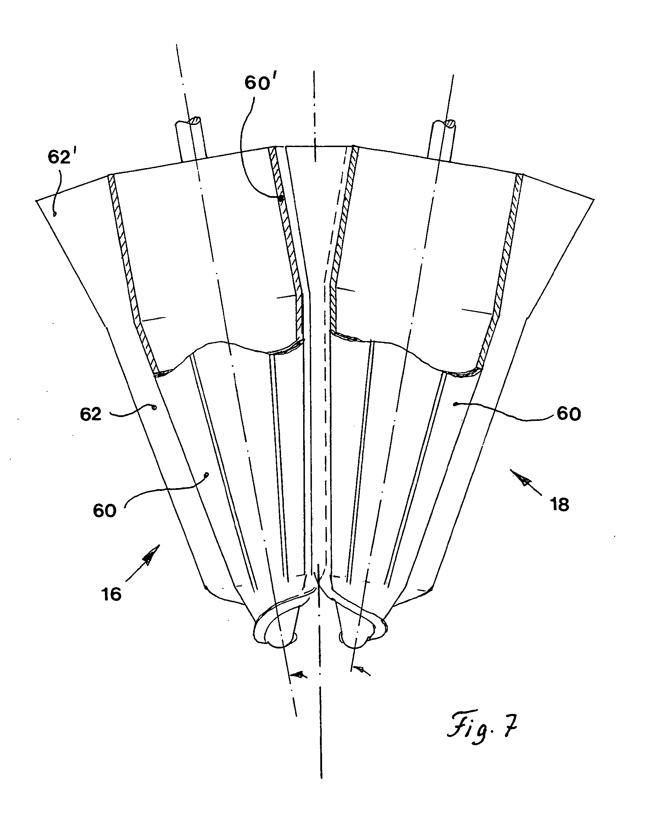

Die Pflückwalzen 16, 18 können auch in vor ihren Spitzen konvergierenden Winkeln angeordnet werden, um den Anstieg der Einzugsgeschwindigkeit in der Flussrichtung noch weiter zu vergrößern. Eine derartige Ausführungsform ist in der Figur 7 dargestellt. Die Drehachsen der Pflückwalzen 16, 18 schließen jeweils einen Winkel von etwa 15° mit der Längsachse des Pflückspalts ein. Ihre Walzenkörper 60 erweitern sich in der Flussrichtung des Guts, das an den in Figur 7 unten eingezeichneten Spitzen einläuft, über ihren Pflückbereich (d. h. die Länge, in der sie die Pflanzenteile in den Pflückspalt 22 ziehen, die Fruchtstände 66 tragen) konisch. Die Endabschnitte 60' der Walzenkörper 60 sind hingegen kreiszylindrisch gestaltet. Es wäre auch denkbar, sie sich sukzessive oder stufenweise nach innen verengend zu gestalten oder mit einer geringeren Konizität zu versehen als im Pflückbereich des Walzenkörpers 60. Die Mitnehmer 62 sind über den konischen Bereich der Walzenkörper 60 mit äußeren Kanten versehen, deren Abstand vom benachbarten Walzenkörper 60 über die Länge der Mitnehmer 62 konstant bleibt. Die Mitnehmer 62 haben jedoch Endabschnitte 62', die sich demgegenüber dreieckförmig nach außen erweitern. Die sich nach außen erweiternden Endabschnitte 62' der Mitnehmer 62 sind somit komplementär zu den sich verengenden Endabschnitten 60' der Walzenkörper 60 gestaltet. Der Spalt zwischen den Mitnehmern 62 der einen Pflückwalze 16 und dem Walzenkörper 60 der anderen Pflückwalze 18 ist somit über die Längen der Pflückwalzen 16, 18 zumindest näherungsweise konstant, wobei sich die Einzugsgeschwindigkeit im Pflückbereich entlang der Länge der Pflückwalzen 16, 18 linear vergrößert und im davon stromab gelegenen Bereich der Pflückwalzen 16, 18, der durch die Endabschnitte 60', 62' definiert wird und mit den Teilen der Pflanzen 64 oberhalb der Fruchtstände 66 zusammenwirkt, in nochmals vergrößertem Maß ansteigt. Dadurch erreicht man, dass der Pflückspalt 22 schnell für nachfolgende Pflanzen 64 frei wird.

Anzumerken ist, dass sich die erfindungsgemäßen Pflückwalzen 16, 18 nicht nur für die beschriebene, reihenunabhängig arbeitende Einzugs- und Pflückeinrichtung 10 eignen, sondern auch für konventionelle Pflücker, die mit Einzugsketten arbeiten.

## Patentansprüche

1. Pflückwalze (16, 18) für ein Erntegerät zur Ernte von Fruchtständen (66) stängeliger Pflanzen (64), mit einem Walzenkörper (60) und um seinen Umfang verteilten, überstehenden Mitnehmern (62), wobei:
sich der Durchmesser des Walzenkörpers (60) über seine Länge ändert,
der Abstand der äußeren Kanten der Mitnehmer (62) vom Walzenkörper (60) sich dazu komplementär ändert,
die Pflückwalze (16, 18) ein bezüglich der Flussrichtung des Ernteguts vorderes Ende und ein hinteres Ende aufweist,
und die Pflückwalze (16, 18) einen ihrem vorderen Ende benachbarten Pflückbereich, in dem sie im Erntebetrieb mit den Fruchtstände (66) tragenden Teilen der Pflanzen (64) zusammenwirkt,
und einen ihrem hinteren Ende benachbarten Bereich aufweist, in dem sie im Erntebetrieb mit den oberhalb der Fruchtstände (66) befindlichen Teilen der Pflanzen (64) zusammenwirkt,
**dadurch gekennzeichnet, dass** der Durchmesser des Walzenkörpers (60) im Pflückbereich größer ist als im dem hinteren Ende benachbarten Bereich der Pflückwalze (16, 18), während der Hüllkreisdurchmesser der Mitnehmer (62) im Pflückbereich kleiner ist als im dem hinteren Ende benachbarten Bereich der Pflückwalze (16, 18),
so dass die Einzugsgeschwindigkeit der Pflückwalze (16, 18) in dem Pflückbereich der Pflückwalze (16, 18) kleiner ist als in dem ihrem hinteren Ende benachbarten Bereich der Pflückwalze (16, 18).

2. Pflückwalze (16, 18) nach Anspruch 1, **dadurch gekennzeichnet, dass** die Pflückwalze (16, 18) vor dem Pflückbereich einen Einlassbereich aufweist, der mit den Teilen der Pflanzen (64) unterhalb der Fruchtstände (66) zusammenwirkt, dass der Durchmesser des Walzenkörpers (60) im Pflückbereich größer ist als im Einlassbereich, und dass der Hüllkreisdurchmesser der Mitnehmer (62) im Einlassbereich größer als im Pflückbereich ist, so dass im Einlassbereich die Einzugsgeschwindigkeit der Pflückwalze (16, 18) größer ist als im Pflückbereich.

3. Pflückwalze (16, 18) nach Anspruch 1 oder 2, **dadurch gekennzeichnet, dass** sich der Durchmesser des Walzenkörpers (60) kontinuierlich ändert, insbesondere kegelstumpfförmig.

4. Pflückwalze (16, 18) nach Anspruch 1 oder 2, **dadurch gekennzeichnet, dass** sich der Durchmesser des Walzenkörpers (60) stufenförmig ändert.

5. Pflückwalze (16, 18) nach einem der Ansprüche 1 bis 4, **dadurch gekennzeichnet, dass** sich der Durchmesser des Hüllkreises der äußeren Kanten der Mitnehmer (62) kontinuierlich oder stufenförmig ändert.

6. Einzugs- und Pflückeinrichtung einer Erntemaschine mit einem Paar Pflückwalzen (16, 18) nach einem der vorhergehenden Ansprüche, wobei die Mitnehmer (62) der einen Pflückwalze (16, 18) in den Hüllkreis der Mitnehmer (62) der anderen Pflückwalze (18, 16) eintauchen.

7. Einzugs- und Pflückeinrichtung nach Anspruch 6, **dadurch gekennzeichnet, dass** der Hüllkreis der Mitnehmer (62) der einen Pflückwalze (16, 18) im Einlassbereich und/oder im stromab des Pflückbereichs gelegenen Bereich in den Raum eintaucht, der durch den verringerten Durchmesser der anderen Pflückwalze (18, 16) freigeworden ist.

8. Einzugs- und Pflückeinrichtung nach Anspruch 6 oder 7, **dadurch gekennzeichnet, dass** die Pflückwalzen (16, 18) zumindest näherungsweise parallel zueinander angeordnet sind.

## Claims

1. Picking roller (16, 18) for a harvesting device for harvesting seed heads (66) of plants (64) having stems, with a roller body (60) and projecting drivers (62) distributed around the circumference thereof, wherein:
the diameter of the roller body (60) changes over the length thereof,
the distance of the outer edges of the drivers (62) from the roller body (60) changes in a complementary manner thereto,
the picking roller (16, 18) has a front end and a rear end with respect to the direction of flow of the crop,
and the picking roller (16, 18) has a picking region which is adjacent to its front end and in which it interacts in the harvesting mode with those parts of the plants (64) which bear seed heads (66),
and a region which is adjacent to its rear end and in which it interacts in the harvesting mode with those parts of the plants (64) which are located above the seed heads (66),
**characterized in that** the diameter of the roller body (60) is larger in the picking region than **in that** region of the picking roller (16, 18) which is adjacent to the rear end, while the envelope circle diameter of the drivers (62) is smaller in the picking region than in that region of the picking roller (16, 18) which is adjacent to the rear end,
and therefore the gathering speed of the picking roller (16, 18) is lower in the picking region of the picking roller (16, 18) than **in that** region of the picking roller (16, 18) which is adjacent to its rear end.

2. Picking roller (16, 18) according to Claim 1, **characterized in that**, upstream of the picking region, the picking roller (16, 18) has an inlet region which interacts with the parts of the plants (64) below the seed heads (66), **in that** the diameter of the roller body (60) is greater in the picking region than in the inlet region, and **in that** the envelope circle diameter of the drivers (62) is greater in the inlet region than in the picking region, and therefore the gathering speed of the picking roller (16, 18) is greater in the inlet region than in the picking region.

3. Picking roller (16, 18) according to Claim 1 or 2, **characterized in that** the diameter of the roller body (60) changes continuously, in particular in the shape of a truncated cone.

4. Picking roller (16, 18) according to Claim 1 or 2, **characterized in that** the diameter of the roller body (60) changes in a step-shaped manner.

5. Picking roller (16, 18) according to one of Claims 1 to 4, **characterized in that** the diameter of the envelope circle of the outer edges of the drivers (62) changes continuously or in a step-shaped manner.

6. Gathering and picking device of a harvester with a pair of picking rollers (16, 18) according to one of the preceding claims, wherein the drivers (62) of one picking roller (16, 18) enter into the envelope circle of the drivers (62) of the other picking roller (18, 16).

7. Gathering and picking device according to Claim 6, **characterized in that** the envelope circle of the drivers (62) of one picking roller (16, 18) enters in the inlet region and/or in the region located downstream of the picking region into the space which has become free because of the reduced diameter of the other picking roller (18, 16).

8. Gathering and picking device according to Claim 6 or 7, **characterized in that** the picking rollers (16, 18) are arranged at least approximately parallel to each other.

## Revendications

1. Rouleau de cueillette (16, 18) pour un engin de récolte pour récolter les fruits (66) de plantes à tiges (64), comprenant un corps de rouleau (60) et des dispositifs d'entraînement (62) saillants, répartis sur sa circonférence, dans lequel :
le diamètre du corps de rouleau (60) varie sur sa longueur,
la distance des arêtes extérieures des dispositifs d'entraînement (62) au corps de rouleau (60) varie également, de manière complémentaire,
le rouleau de cueillette (16, 18) présente une extrémité avant et une extrémité arrière par rapport à la direction du flux de la récolte,
et le rouleau de cueillette (16, 18) présente une région de cueillette adjacente à son extrémité avant, dans laquelle il coopère, pendant l'opération de récolte, avec les parties des plantes (64) portant les fruits (66),
et présente une région adjacente à son extrémité arrière, dans laquelle il coopère, pendant l'opération de récolte, avec les parties des plantes (64) se trouvant au-dessus des fruits (66),
**caractérisé en ce que** le diamètre du corps de rouleau (60) dans la région de cueillette est supérieur à celui dans la région du rouleau de cueillette (16, 18) adjacente à l'extrémité arrière, tandis que le diamètre du cercle d'enveloppement des dispositifs d'entraînement (62) dans la région de cueillette est plus petit que dans la région du rouleau de cueillette (16, 18) adjacente à l'extrémité arrière,
de sorte que la vitesse d'amenée du rouleau de cueillette (16, 18) dans la région de cueillette du rouleau de cueillette (16, 18) soit inférieure à celle dans la région du rouleau de cueillette (16, 18) adjacente à son extrémité arrière.

2. Rouleau de cueillette (16, 18) selon la revendication 1, **caractérisé en ce que** le rouleau de cueillette (16, 18) présente, avant la région de cueillette, une région d'entrée qui coopère avec les parties des plantes (64) sous les fruits (66), **en ce que** le diamètre du corps de rouleau (60) dans la région de cueillette est supérieur à celui dans la région d'entrée, et **en ce que** le diamètre du cercle d'enveloppement des dispositifs d'entraînement (62) dans la région d'entrée est supérieur à celui dans la région de cueillette, de sorte que dans la région d'entrée, la vitesse d'amenée du rouleau de cueillette (16, 18) soit supérieure à celle dans la région de cueillette.

3. Rouleau de cueillette (16, 18) selon la revendication 1 ou 2, **caractérisé en ce que** le diamètre du corps de rouleau (60) varie en continu, notamment en forme de tronc de cône.

4. Rouleau de cueillette (16, 18) selon la revendication 1 ou 2, **caractérisé en ce que** le diamètre du corps de rouleau (60) varie de manière étagée.

5. Rouleau de cueillette (16, 18) selon l'une quelconque des revendications 1 à 4, **caractérisé en ce que** le diamètre du cercle d'enveloppement des arêtes extérieures des dispositifs d'entraînement (62) varie en continu ou de manière étagée.

6. Dispositif d'amenée et de cueillette d'une moissonneuse, comprenant une paire de rouleaux de cueillette (16, 18) selon l'une quelconque des revendications précédentes, dans lequel les dispositifs d'entraînement (62) d'un rouleau de cueillette (16, 18) plongent dans le cercle d'enveloppement des dispositifs d'entraînement (62) de l'autre rouleau de cueillette (18, 16).

7. Dispositif d'amenée et de cueillette selon la revendication 6, **caractérisé en ce que** le cercle d'enveloppement des dispositifs d'entraînement (62) d'un rouleau de cueillette (16, 18) dans la région d'entrée et/ou dans la région située en aval de la région de cueillette plonge dans l'espace qui a été libéré par le diamètre réduit de l'autre rouleau de cueillette (18, 16).

8. Dispositif d'amenée et de cueillette selon la revendication 6 ou 7, **caractérisé en ce que** les rouleaux de cueillette (16, 18) sont disposés au moins approximativement parallèlement l'un à l'autre.
